# EUROPEAN PATENT SPECIFICATION

(11) **EP 4 152 008 B1**
(45) Date of publication and mention of the grant of the patent: **04.06.2025**
(21) Application number: 22189855.4
(22) Date of filing: 11.08.2022
(51) Int. Cl.: G01N 35/04, G01N 35/00

(54) **METHOD FOR CONTROLLING A DIAGNOSTIC DEVICE THAT TRANSPORTS CARTRIDGES WITH A CONVEYOR BELT AND A DIAGNOSTIC DEVICE USING THE SAME**
VERFAHREN ZUM STEUERN EINER DIAGNOSEVORRICHTUNG, DIE KARTUSCHEN MIT EINEM FÖRDERBAND TRANSPORTIERT, UND EINE DIAGNOSEVORRICHTUNG UNTER VERWENDUNG DESSELBEN
PROCÉDÉ DE COMMANDE D'UN DISPOSITIF DE DIAGNOSTIC TRANSPORTANT DES CARTOUCHES AVEC UNE COURROIE DE TRANSPORTEUR ET DISPOSITIF DE DIAGNOSTIC L'UTILISANT

(30) Priority: 15.09.2021 KR 20210123560
(43) Date of publication of application: 22.03.2023
(73) Proprietor: Boditech Med Inc., Chuncheon-si, Gangwon-do 24398 (KR)
(72) Inventor: KIM, Byeong Chul, 24304 Gangwon-do (KR); BANG, Ju Hyoung, 24415 Gangwon-do (KR); KIM, Young Duk, 24415 Gangwon-do (KR); LEE, Min Whan, 24209 Gangwon-do (KR); RYU, Seung Hwan, 24377 Gangwon-do (KR); KWON, Soon Il, 26498 Gangwon-do (KR); JO, Dong Hwan, 24216 Gangwon-do (KR)
(74) Representative: De Vries & Metman

(56) References cited:
- US-A1- 2005 266 570
- US-A1- 2019 331 705

## Description

### FIELD OF THE INVENTION

The present invention relates to a method for controlling a diagnostic device according to the preamble of claim 1, and to a diagnostic device according to the preamble of claim 6.

The closest state of the art showing such a method and device is US2019/331705 A1. Another example can be found in US 2005/266570 A1.

### BACKGROUND OF THE INVENTION

With the development of medicine, biotechnology and various related technologies, tests for detecting various molecular indicators such as blood cells, genes, proteins, antigens, and pathogens in predetermined biological samples such as urine and blood have been widely practiced. The test process is generally performed by collecting a sample, reacting the collected sample with a predetermined reagent suitable for a target indicator, and analyzing and observing the changes that occur. Through this, it is possible to perform qualitative and/or quantitative analysis of various molecular indicators included in the sample and obtain the information on diagnosis, progression, or prognosis of a disease based on the analysis.

Meanwhile, devices capable of processing a large amount of lateral flow type diagnostic cartridges are currently being used. When the user mounts the consumables required for diagnosis on the diagnostic device and puts the sample into the diagnostic device, the diagnostic device automatically performs the entire procedures through a predetermined algorithm for collecting the sample, mixing the collected sample with the detection buffer (DB) to perform pretreatment, and dispensing the sample into the cartridge for measurement so that the diagnosis result may be stored in the memory, transmitted to the outside through the communication unit, or displayed on the display device. Such a diagnostic device needs to further increase the throughput per hour.

### DETAILED DESCRIPTION OF THE INVENTION

### OBJECT OF THE INVENTION

The present invention is aimed at providing a method for increasing the throughput of a diagnostic device for transporting a lateral flow type diagnostic cartridge with a conveyor belt, and a diagnostic device using the same.

The objective of the present invention is not limited to the above-mentioned objective, and other objectives of the present invention not mentioned above will be clearly understood by those skilled in the art from the following description.

### TECHNICAL SOLUTION

An aspect of the present invention provides a method for controlling a diagnostic device according to the main claim.

Preferred embodiments of the method are subject of claims 2-5.

Another aspect of the present invention provides a diagnostic device according to claim 6.

### EFFECTS OF THE INVENTION

According to the present invention described above, the reading timing of the second cartridge may be later than the reading timing of the first cartridge.

Preferably, the second slot is adjacent to the first slot.

Preferably, the step (c) of mounting the second cartridge includes mounting the second cartridge in the second slot located at the rear of the first slot without driving the conveyor belt in a reverse direction if the first cartridge has been discharged from the conveyor belt.

Preferably, the method of the present invention further includes a step of: (f) transporting the first cartridge to the sample dispensing position by driving the conveyor belt in the forward direction.

Another aspect of the present invention provides a diagnostic device for processing lateral flow type cartridges comprises: a conveyor belt having a plurality of cartridge slots for mounting the cartridges; a measuring unit for reading the reaction result in the cartridge; a cartridge ejecting unit for ejecting the cartridge mounted on a magazine to the conveyor belt; a control unit for controlling driving of the conveyor belt and the cartridge ejecting unit, wherein the control unit mounts a first cartridge in a first slot of the conveyor belt by driving the cartridge ejecting unit; transports the first cartridge to a measuring unit by driving the conveyor belt when a predetermined time for incubation has elapsed from the time of mounting the first cartridge; mounts a second cartridge in a second slot located at the rear of the first slot by driving the conveyor belt in a reverse direction so as to drive a cartridge ejecting unit if the first cartridge being incubated is present on the conveyor belt; and discharges the first cartridge that has been read, from the conveyor belt.

### EFFECTS OF THE INVENTION

According to the present invention described above, the throughput per hour of the diagnostic device can be increased by controlling the position and time to eject the cartridge to the conveyor belt in the diagnostic device that transports the lateral flow type diagnostic cartridge to the conveyor belt.

### BRIEF DESCRIPTION OF THE DRAWINGS

FIG. 1 illustrates the configuration of a diagnostic device according to an embodiment of the present invention.
FIG. 2 is a conceptual diagram illustrating the overall structure and operation of the diagnostic device shown in FIG. 1.
FIG. 3 depicts an example of a diagnostic cartridge used in the diagnostic device shown in FIG. 1.
FIG. 4 illustrates the configuration of a magazine in which the diagnostic cartridge shown in FIG. 3 will be mounted.
FIG. 5 depicts a magazine shown in FIG. 4 in which the cartridge has been mounted.
FIG. 6 illustrates the configuration of a magazine station of the diagnostic device shown in FIG. 1.
FIG. 7A illustrates a configuration for sample pre-processing and dispensing in the diagnostic device shown in FIG. 1, FIG. 7B illustrates a configuration of a dispensing module of the diagnostic device shown in FIG. 1, and FIG. 7C depicts a tube container for containing a detection buffer in the diagnostic device shown in FIG. 1.
FIG. 8 illustrates a configuration of a measuring unit and a cartridge discharging unit of the diagnostic device shown in FIG. 1.
FIG. 9 is a flowchart of a control method used by a control unit for forward driving of a cartridge transporting unit in the diagnostic device shown in FIG. 1.
FIG. 10 is a flowchart of a control method used by a control unit for reverse driving of a cartridge transporting unit in the diagnostic device shown in FIG. 1.

### DETAILED DESCRIPTION OF EXEMPLARY EMBODIMENT OF THE INVENTION

Hereinafter, embodiments of the present invention will be described in detail with reference to the accompanying drawings. These embodiments are illustrative for the purpose of illustrating the present invention, and is not intended to limit the scope of the present invention.

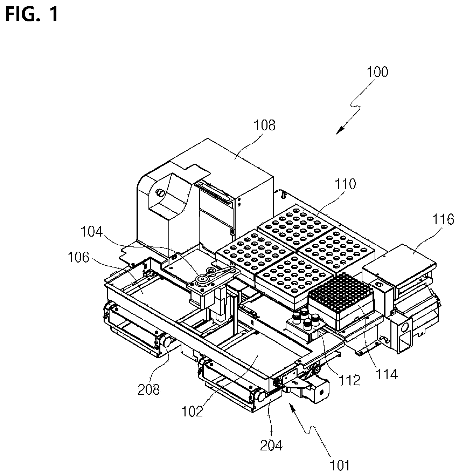

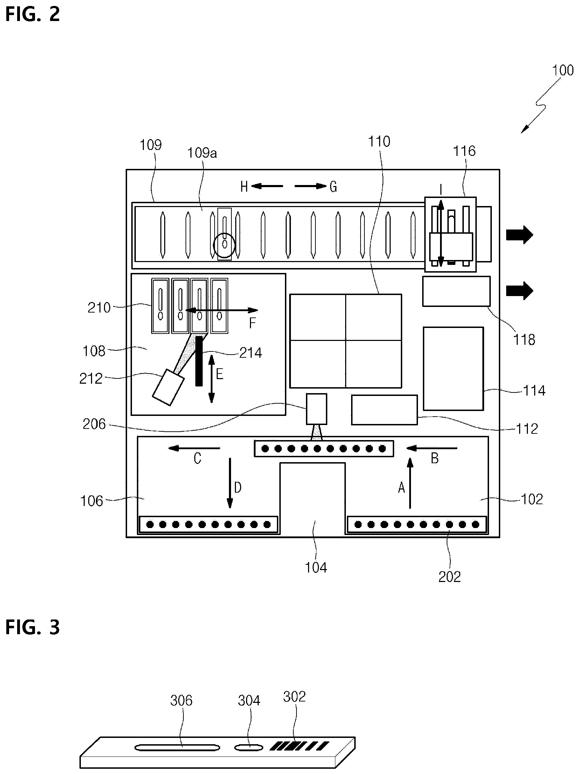

FIG. 1 illustrates the configuration of a diagnostic device 100 according to an embodiment of the present invention. FIG. 2 is a conceptual diagram illustrating the overall structure and operation of the diagnostic device 100 shown in FIG. 1. As shown in FIGS. 1 and 2, the diagnostic device 100 includes a sample transporting unit 101, a magazine station 108, a cartridge transporting unit 109, a main buffer station 110, a sub-buffer station 112, a tip station 114, an optical measuring unit 116, and a tip discharging unit 118. The sample transporting unit 101 includes a sample input station 102, a sample mixing unit 104, and a sample discharge station 106.

When a sensor (not shown) senses that a sample rack 202 equipped with ten sample containers has been inserted, the sample input station 102 transports the sample rack 202 in the A and B directions by operating the drive unit 204. The sample information reader 206 reads the barcode of the sample rack 202 transported through the sample input station 102 so as to check the sample type, and reads the barcode of the container containing the sample so as to check patient information. The sample information reader 206 may be implemented with a camera. In this case, it is possible to recognize handwritten patient information. The sample mixing unit 104 rotates the sample container mounted on the sample rack 202 when a sample required to be mixed has been transported after the sample information reader 206 reads. The sample discharge station 106 operates the driving unit to transport the sample rack 202 in the C and D directions so as to discharge the sample that has been measured.

The main buffer station 110 is the place on which the detection buffer (DB) contained in the container is mounted. In this embodiment, four sets of twenty-five detection buffers can be mounted. The sample collected from the sample rack 202 is mixed with the detection buffer in the corresponding buffer container so that pre-processing may be performed. If the item to measure requires two buffers, another buffer is mounted at sub-buffer station 112.

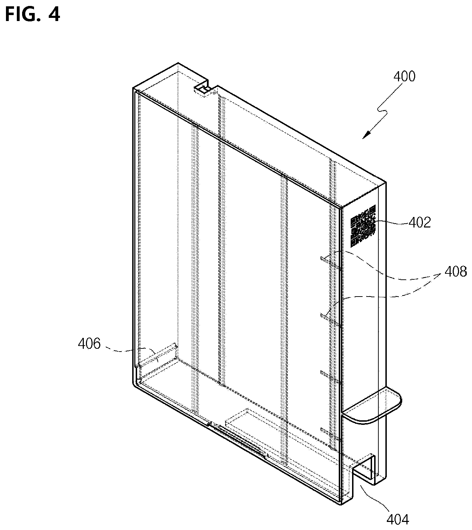

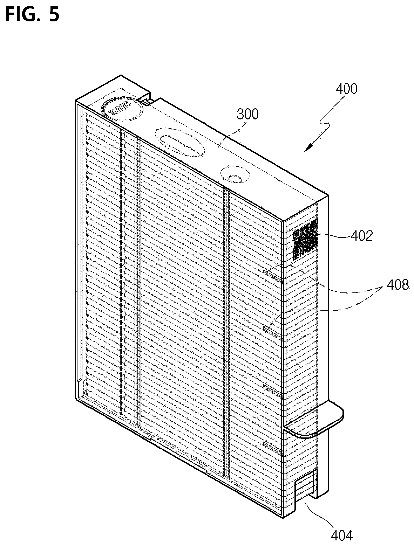

FIG. 3 depicts an example of a lateral flow type diagnostic cartridge 300 used in the diagnostic device shown in FIG. 1. FIG. 4 illustrates the configuration of a magazine 400 in which the diagnostic cartridge shown in FIG. 3 will be mounted. FIG. 5 depicts a magazine 400 shown in FIG. 4 in which the cartridge 300 has been mounted.

The diagnostic cartridge 300 is printed with a cartridge barcode 302 that indicates the item to measure and the manufacturing lot. The pretreated sample is introduced into the dispensing hole 304. The reaction result of the sample is measured through the measurement window 306 .

Up to 25 diagnostic cartridges 300 are mounted on the magazine 400, for example. A barcode 402 printed on the magazine 400 indicates the item to measure and the manufacturing lot of the mounted diagnostic cartridge 300. The magazine 400 has an ejecting unit inlet 404 and a cartridge ejection port 406 which face each other at the bottom of the magazine 400.

The magazine 400 may be formed of a transparent or translucent material so that the mounted cartridge 300 can be identified. In addition, quantity indicators 408 may be made so that the number of the mounted cartridges 300 can be easily identified.

When the incubated diagnostic cartridge 300 is transported by the cartridge transporting unit 109, the optical measuring unit 116 scans the reaction result from the measurement window 306 of the diagnostic cartridge 300 while mainly moving in the I direction. In order to accurately scan the reaction result, the optical measuring unit 116 performs two-dimensional scanning in which it moves in the I direction (or front-rear direction) and in the transporting direction (or left-right direction) of the diagnostic cartridge 300.

The cartridge scanned by the optical measuring unit 116 is transported by the cartridge transporting unit 109 and discharged from the cartridge discharging unit (not shown).

The tip station 114 has one hundred twenty tips mounted on a tip rack. The tip is discharged through the tip discharging unit 118 after the tip is used for sample collection, mixing of the sample and buffer, dispensing of the mixed solution, etc.

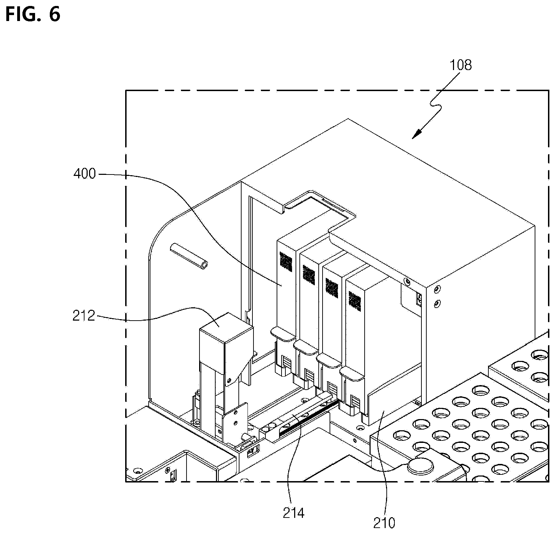

FIG. 6 illustrates the configuration of a magazine station 108 of the diagnostic device shown in FIG. 1. As shown in FIG. 6, the magazine station 108 includes a magazine holder 210, a magazine barcode reader 212, and a cartridge ejecting unit 214.

The magazine barcode reader 212 recognizes the barcode 402 printed on the magazine 400. The cartridge ejecting unit 214 moves in the E direction and is put into the ejecting unit inlet 404 so that the cartridge 300 can be ejected through the cartridge ejection port 406. The magazine holder 210 controls the barcode recognition position and the cartridge ejection position by transporting the magazine 400 in the F direction (shown in FIG. 2).

The cartridge transporting unit 109 is composed of a conveyor belt, and has a plurality of cartridge slots 109a. One cartridge 300 is seated in one cartridge slot 109a by the cartridge ejecting unit 214. The control unit (not shown) drives the cartridge transporting unit 109 in the G direction (or the forward direction) so as to transport the cartridge 300 seated in the cartridge slot 109a to the dispensing position.

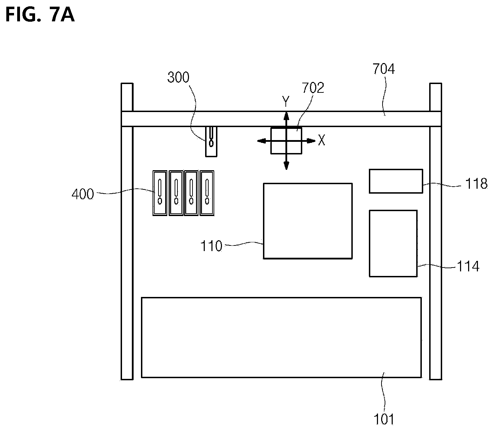

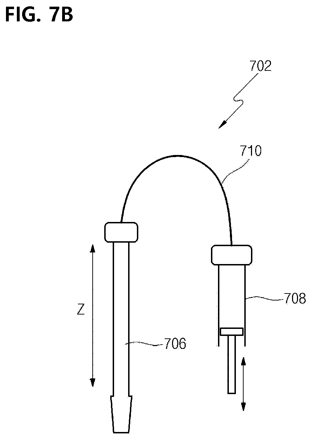

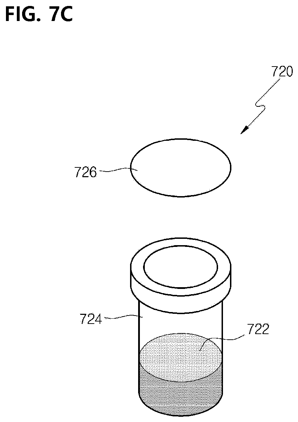

FIG. 7A illustrates a configuration for sample pre-processing and dispensing in the diagnostic device 100 shown in FIG. 1. FIG. 7B illustrates a configuration of a dispensing module 702 of the diagnostic device 100 shown in FIG. 1. FIG. 7C depicts a tube container 720 for containing a detection buffer in the diagnostic device 100 shown in FIG. 1.

The detection buffer 722 is a solution required for pretreatment of a sample. The buffer tube 724 is a container for containing the detection buffer 722. The opening of the buffer tube 724 is sealed with sealing paper 726. The sealing paper 726 is an aluminum-based paper and is attached to buffer tube 724. The sealing paper 726 is punctured by a tip (not shown) while the sample is being pre-processed.

Dispensing module 702 consists of an adapter 706 and a syringe pump 708 connected to each other through a tube 710. The adapter 706 is connected to a driving unit (not shown) that moves in the Z-axis direction, and the lower part of the adapter 706 is formed in a shape for easy attachment and detachment of the tip used for sample dispensing. The syringe pump 708 sucks and discharges the sample or mixed solution.

The dispensing module driving unit 704 moves the dispensing module 702 in the X and Y directions. When the cartridge 300 is transported to the dispensing position by the cartridge transporting unit 109, the dispensing module 702 is moved to the tip station 114 by the dispensing module driving unit 704, and the dispensing module 702 moves the adapter 706 in the Z direction to insert the tip to the lower part of the adapter 706. Next, the dispensing module 702 is moved to the sample rack 202 by the dispensing module driving unit 704, and a sample is collected at the tip inserted into the adapter 706 by the syringe pump 708, and the sample is discharged to the buffer tube 724 mounted on the buffer station 110. The dispensing module 702 sucks the mixture of the sample and the detection buffer from the buffer tube 724 and dispenses it into the dispensing hole 304 of the cartridge 300.

The cartridge transporting unit 109 is maintained at a constant temperature for incubation. If there is a cartridge in which the incubation is completed, the control unit (not shown) drives the cartridge transporting unit 109 in the forward direction so as to measure the reaction result in the cartridge and transports the cartridge to the optical measuring unit 116.

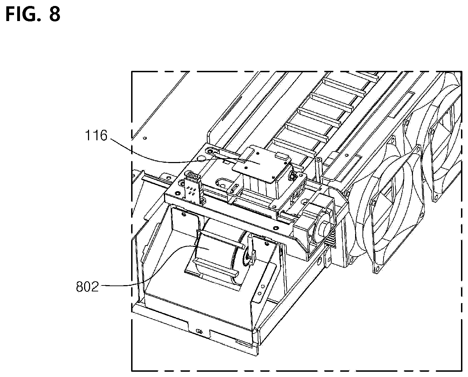

FIG. 8 illustrates a configuration of a measuring unit 116 and a cartridge discharging unit 802 of the diagnostic device 100 shown in FIG. 1. The optical measuring unit 116 scans the reaction result through the measurement window 306 of the cartridge 300 while moving the sensor unit in the I direction (shown in FIG. 2).

The cartridge outlet 802 is located in front of the optical measuring unit 116. That is, when the cartridge scanned by the optical measuring unit 116 is transported in the forward direction, it reaches the cartridge discharge unit 802 and falls, and is collected in a cartridge collecting container (not shown) . Therefore, the cartridges must be scanned by the optical measuring unit 116 in the order they are inserted into the slots of the cartridge transporting unit 109. The scan time is determined by the dispensing time and the incubation reaction time. If the item to measure is different, its incubation reaction time is also different. Therefore, the dispensing time or the cartridge insertion time must be determined so that the scanning time of the cartridge located in the rear may not precede that of the cartridge located in the front.

Hereinafter, the operation of the diagnostic device 100 will be described.

In the test preparation of diagnostic device 100, the test buffer for the item to measure is mounted on the buffer station 110, and the magazine 400 is mounted on the magazine station 108. Also, whether or not there are enough tips in a tip station 114 must be checked for measurement. The item information of the mounted magazine which has been read through the barcode 402 is stored in the memory of the diagnostic device 100.

After the sample is loaded in a sample rack suitable for the type of sample container, the sample rack 202 is put into the sample input station 102. The barcode of the sample rack 202 transported by the sample input station 102 is read by the sample information reader 206 to confirm the type of the sample container. While transporting the sample rack 202 in the B direction (shown in FIG. 2) by the sample input station 102, the number of samples is identified by the sample information reader 206. In addition, the patient information attached to the sample container is read by the sample information reader 206 and stored in the memory.

Next, dispensing module 702 inserts the tip into the lower part of adapter 706 and it should be checked. When the dispensing module 702 is transported to the sample collection location, the sample is collected as much as necessary according to the item to measure. The collected sample is transported to the buffer stations 110 and 112 for pre-treatment, mixed with a buffer, and pre-treated.

The cartridge is ejected from the magazine in which the cartridge of the item to measure is mounted among several magazines. The ejected cartridge is inserted into the cartridge slot 109a of the cartridge transporting unit 109 and transported to the dispensing position. The mixture of sample and detection buffer is sucked by the dispensing module 702 and dispensed into cartridge 300 at the dispensing position.

The cartridge 300 waits in cartridge transporting unit 109 for the incubation reaction time and then is transported to the optical measurement location for measurement. When the optical measuring unit 116 moves with scanning the cartridge 300 and then the scanned information is transmitted, the control unit calculates the diagnosis result by internal operation. The controller stores the calculated diagnostic result in the memory of the diagnostic device 100 or displays it on the display. In addition, the control unit can transmit the calculated diagnostic result to the outside through LAN, RS232C, WIFI, etc.

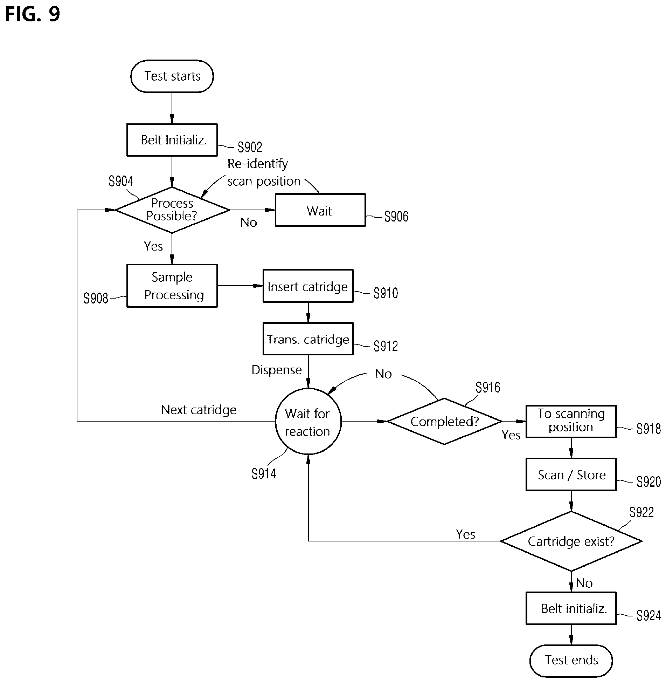

FIG. 9 is a flowchart of a control method used by a control unit for forward driving of a cartridge transporting unit 109 in the diagnostic device shown 100 in FIG. 1. The cartridge transporting unit 109 includes a conveyor belt

When the test starts, the cartridge transporting unit 109 is initialized (S902), and it is checked whether the sample processing is possible (S904). If any cartridge is being scanned by the optical measuring unit 116, it waits until scanning is completed (S906). If the sample processing is possible, the sample is pre-processed through the dispensing module 702 (S908).

Next, the cartridge 300 mounted on the magazine 400 is injected into the slot (109a) of the cartridge transporting unit 109 by the cartridge ejecting unit 214 (S910), and the control unit drives the cartridge transporting unit 109 in the forward direction to transport cartridge 300 to the dispensing position (S912).

After the dispensing module 702 dispenses the mixture of the sample and the detection buffer, the control unit waits for the incubation reaction (S914). It is determined whether the next sample processing is possible while the control unit is waiting for the incubation reaction (S904). When the incubation reaction is completed (S916), the control unit drives the cartridge transporting unit 109 in the forward direction to transport the cartridge to the optical measuring unit 116 so that optical scanning may be possible (S918). The optical measuring unit 116 scans the reaction result in the cartridge 300 and stores it in a memory (not shown) (S920).

Next, it is determined whether there is any cartridge in which the reaction is taking place on the cartridge transporting unit 109 (S922). If there is any cartridge in which the reaction is taking place on the cartridge transporting unit 109, the control unit waits until the reaction is completed (S914). If there is no cartridge in which the reaction is taking place on the cartridge transporting unit 109, the conveyor belt is initialized and the testing is terminated (S924).

According to the control method shown in FIG. 9, the cartridge transporting unit 109 is driven in the forward direction to transport the cartridge 300 in which the incubation reaction is completed to the scan position of the optical measuring unit 116, and another cartridge is inserted into the cartridge slot of the cartridge transporting unit 109. Accordingly, an empty slot is created between the current cartridge and its previous cartridge inserted immediately before. Therefore, the number of the cartridges in which the incubation reaction takes place is limited in the cartridge transporting unit 109.

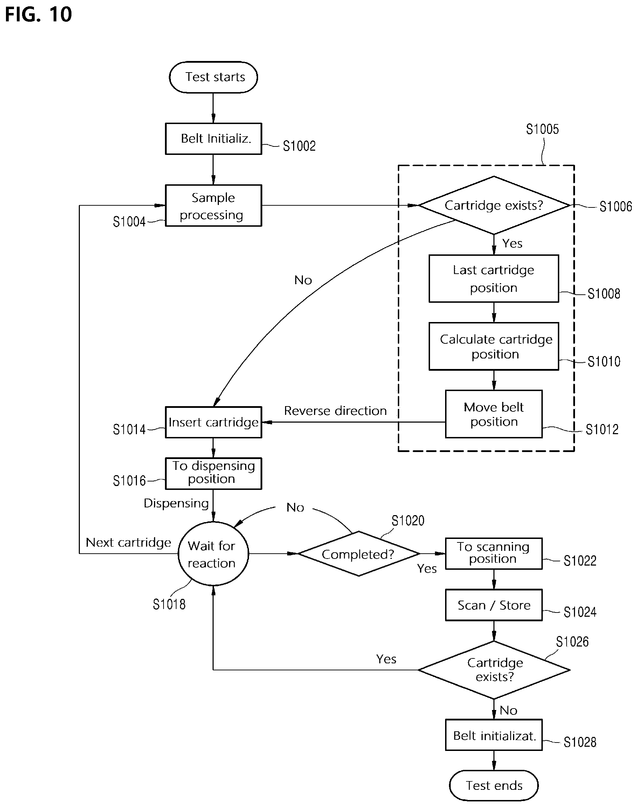

FIG. 10 is a flowchart of a control method used by a control unit for reverse driving of a cartridge transporting unit 109 in the diagnostic device 100 shown in FIG. 1.

When the test starts, the cartridge transporting unit 109 is initialized (S1002), and the sample is pre-processed by the dispensing module 702 (S1004).

Next, it is determined whether there is any cartridge in which reaction is taking place on the cartridge transporting unit 109 (S1006). If there is any cartridge in which reaction is taking place in the cartridge transporting unit 109, the slot position of the last inserted cartridge is looked for (S1008). The position of the slot of the rear adjacent to the slot of the last cartridge is calculated (S1010). In this way, cartridges can be inserted without making any empty slots. Next, the control unit drives the cartridge transporting unit 109 in the reverse direction (H direction) so that the slot at the position calculated in step S1010 may be at the position where the cartridge is ejected from the magazine 400 (S1012), and the cartridge is inserted into the slot (S1014). If there is no cartridge in which the reaction is taking place in the cartridge transporting unit 109, the cartridge is directly inserted without driving the cartridge transporting unit 109 in the reverse direction (S1014). If the cartridge is not moved back to be inserted into the slot, an unread cartridge may be dislodged while another cartridge is inserted.

Next, the cartridge transporting unit 109 is driven in the forward direction to move the cartridge to the dispensing position. After the dispensing module 702 dispenses the mixture of the sample and the detection buffer, the control unit waits for the incubation reaction (S1018). The next sample is processed while the control unit is waiting for the incubation reaction (S1004). When the incubation reaction is completed (S1020), the control unit drives the cartridge transporting unit 109 in the forward direction to transport the cartridge to the optical measuring unit 116 so that optical scanning may be possible (S1022). The optical measuring unit 116 scans the reaction result in the cartridge 300 and stores it in a memory (not shown) (S1024).

Next, it is determined whether there is any cartridge in which the reaction is taking place on the cartridge transporting unit 109 (S1026). If there is any cartridge in which the reaction is taking place on the cartridge transporting unit 109, the control unit waits until the reaction is completed (S1018). If there is no cartridge in which the reaction is taking place on the cartridge transporting unit 109, the conveyor belt is initialized and the testing is terminated (S1028).

According to the control method shown in FIG. 10, the cartridge transporting unit 109 is driven in the forward direction so that the cartridge 300 in which the incubation reaction is completed may be scanned with the optical measuring unit 116, and then the cartridge transporting unit 109 is driven in the reverse direction so that no empty slot may be created between the current cartridge and its previous cartridge inserted immediately before. Therefore, the number of the cartridges in which the incubation reaction takes place may be more in the cartridge transporting unit 109 compared to the control method shown in FIG. 9 so that the throughput in a diagnostic device 100 may be increased.

Although preferred embodiments of the present invention have been described in detail above, the scope of the present invention is not limited thereto, but various modifications and improvements made by those skilled in the art using the basic concept of the present invention as defined in the appended claims are also within the scope of the present invention.

## Claims

1. A method for controlling a diagnostic device that transports cartridges (300) with a conveyor belt (109) including steps of:
(a) mounting a first cartridge (300) in a first slot (109a) of the conveyor belt (109);
(b) performing an incubation reaction on the first cartridge;
(c) transporting the first cartridge (300) in a forward direction (G) to a measuring unit (116) when a predetermined time for incubation has elapsed from the time of mounting the first cartridge;
(d) mounting a second cartridge (300) in a second slot (109a);
(e) reading a reaction result in the first cartridge (300); and
(f) discharging the first cartridge (300) that has been read, from the conveyor belt (109),
**characterized in that**
during step (d) the second cartridge (300) is mounted in said second slot (109a) located at the rear of the first slot (109a) by driving the conveyor belt (109) in a reverse direction (H) if the first cartridge being incubated is present on the conveyor belt.

2. The method of claim 1, wherein the step (c) of mounting the second cartridge (300) includes a step of mounting the second cartridge (300) so that the reading timing of the second cartridge at the measuring unit (116) may be later than the reading timing of the first cartridge at the measuring unit.

3. The method of claim 1, wherein the second slot (109a) is adjacent to the first slot (109a).

4. The method of claim 1, wherein the step (c) of mounting the second cartridge (300) includes a step of mounting the second cartridge in the second slot (109a) located at the rear of the first slot (109a) without driving the conveyor belt (109) in a reverse direction (H) if the first cartridge has been discharged from the conveyor belt.

5. The method of claim 1, further including a step of:
transporting the first cartridge (300) to the sample dispensing position at a dispensing module (702) by driving the conveyor belt (109) in the forward direction (G).

6. A diagnostic device (100) for processing lateral flow type cartridges (300) comprising:
a conveyor belt (109) having a plurality of cartridge slots (109a) for mounting the cartridges;
a measuring unit (116) for reading the reaction result in the cartridge;
an incubation unit;
a cartridge ejecting unit (214) for ejecting the cartridge (300) mounted on a magazine (400) to the conveyor belt (109);
a control unit for controlling driving of the conveyor belt (109) and the cartridge ejecting unit (214),
performing an incubation reaction on the first cartridge by the incubation unit;
wherein the control unit controls: mounting a first cartridge (300) in a first slot (109a) of the conveyor belt (109) by driving the cartridge ejecting unit (214); transporting the first cartridge to the measuring unit (116) by driving the conveyor belt (109) in a forward direction (G) when a predetermined time for incubation has elapsed from the time of mounting the first cartridge; mounting a second cartridge (300) in a second slot (109a), and discharging the first cartridge (300) that has been read, from the conveyor belt (109), **characterized in that** the control unit controls mounting the second cartridge (300) in the second slot (109a) that is located at the rear of the first slot (109a) by driving the conveyor belt (109) in a reverse direction (H) and driving the cartridge ejecting unit (214) if the first cartridge being incubated is present on the conveyor belt.

## Patentansprüche

1. Verfahren zum Steuern einer Diagnostikvorrichtung, die Kartuschen (300) mit einem Förderband (109) transportiert, aufweisend Schritte des:
(a) Anbringens einer ersten Kartusche (300) in einem ersten Schlitz (109a) des Förderbandes (109);
(b) Durchführens einer Inkubationsreaktion an der ersten Kartusche;
(c) Transportierens der ersten Kartusche (300) in einer Vorwärtsrichtung (G) zu einer Messeinheit (116), wenn eine vorbestimmte Inkubationszeit ab dem Zeitpunkt des Anbringens der ersten Kartusche verstrichen ist;
(d) Anbringens einer zweiten Kartusche (300) in einem zweiten Schlitz (109a);
(e) Lesens eines Reaktionsergebnisses in der ersten Kartusche (300); und
(f) Entfernens der ersten Kartusche (300), die gelesen wurde, von dem Förderband (109),
**dadurch gekennzeichnet, dass**
während des Schritts (d) die zweite Kartusche (300) in dem zweiten Schlitz (109a), der sich an der Rückseite des ersten Schlitzes (109a) befindet, angebracht wird, indem das Förderband (109) in einer Rückwärtsrichtung (H) angetrieben wird, wenn die erste Kartusche, die inkubiert wird, an dem Förderband vorhanden ist.

2. Verfahren nach Anspruch 1, wobei der Schritt (c) des Anbringens der zweiten Kartusche (300) einen Schritt des Anbringens der zweiten Kartusche (300) derart, dass der Lesezeitpunkt der zweiten Kartusche an der Messeinheit (116) später sein kann als der Lesezeitpunkt der ersten Kartusche an der Messeinheit, aufweist.

3. Verfahren nach Anspruch 1, wobei der zweite Schlitz (109a) benachbart zu dem ersten Schlitz (109a) ist.

4. Verfahren nach Anspruch 1, wobei der Schritt (c) des Anbringens der zweiten Kartusche (300) einen Schritt des Anbringens der zweiten Kartusche in dem zweiten Schlitz (109a), der sich an der Rückseite des ersten Schlitzes (109a) befindet, ohne das Förderband (109) in einer Rückwärtsrichtung (H) anzutreiben, wenn die erste Kartusche von dem Förderband entfernt worden ist, aufweist.

5. Verfahren nach Anspruch 1, ferner aufweisend einen Schritt des:
Transportierens der ersten Kartusche (300) zu der Probendispensierposition an einem Dispensiermodul (702) durch Antreiben des Förderbandes (109) in der Vorwärtsrichtung (G).

6. Diagnostikvorrichtung (100) zum Verarbeiten von Kartuschen (300) vom Lateral-Flow-Typ, aufweisend:
ein Förderband (109) mit einer Mehrzahl von Kartuschenschlitzen (109a) zum Anbringen der Kartuschen;
eine Messeinheit (116) zum Lesen des Reaktionsergebnisses in der Kartusche;
eine Inkubationseinheit;
eine Kartuschenausstoßeinheit (214) zum Ausstoßen der an einem Magazin (400) angebrachten Kartusche (300) auf das Förderband (109);
eine Steuereinheit zum Steuern eines Antreibens des Förderbandes (109) und der Kartuschenausstoßeinheit (214), wobei eine Inkubationsreaktion an der ersten Kartusche durch die Inkubationseinheit durchgeführt wird;
wobei die Steuereinheit steuert: Anbringen einer ersten Kartusche (300) in einem ersten Schlitz (109a) des Förderbandes (109) durch Antreiben der Kartuschenausstoßeinheit (214); Transportieren der ersten Kartusche zu der Messeinheit (116) durch Antreiben des Förderbandes (109) in einer Vorwärtsrichtung (G), wenn eine vorbestimmte Inkubationszeit ab dem Zeitpunkt des Anbringens der ersten Kartusche verstrichen ist; Anbringen einer zweiten Kartusche (300) in einem zweiten Schlitz (109a) und Entfernen der ersten Kartusche (300), die gelesen worden ist, von dem Förderband (109), **dadurch gekennzeichnet, dass** die Steuereinheit das Anbringen der zweiten Kartusche (300) in dem zweiten Schlitz (109a), der sich an der Rückseite des ersten Schlitzes (109a) befindet, steuert durch Antreiben des Förderbandes (109) in einer Rückwärtsrichtung (H) und Anreiben der Kartuschenausstoßeinheit (214), wenn die erste Kartusche, die inkubiert wird, an dem Förderband vorhanden ist.

## Revendications

1. Procédé de commande d'un dispositif de diagnostic qui transporte des cartouches (300) avec une bande transporteuse (109), comportant des étapes suivantes :
(a) le montage d'une première cartouche (300) dans une première fente (109a) de la bande transporteuse (109) ;
(b) la réalisation d'une réaction d'incubation sur la première cartouche ;
(c) le transport de la première cartouche (300) dans une direction avant (G) vers une unité de mesure (116) lorsqu'une durée d'incubation prédéterminée s'est écoulée à partir du moment du montage de la première cartouche ;
(d) le montage d'une seconde cartouche (300) dans une seconde fente (109a) ;
(e) la lecture d'un résultat de réaction dans la première cartouche (300) ; et
(f) le déchargement de la première cartouche (300) qui a été lue, à partir de la bande transporteuse (109),
**caractérisé en ce que**
pendant l'étape (d), la seconde cartouche (300) est montée dans ladite seconde fente (109a) située à l'arrière de la première fente (109a) en entraînant la bande transporteuse (109) dans une direction inverse (H) si la première cartouche en cours d'incubation est présente sur la bande transporteuse.

2. Procédé selon la revendication 1, dans lequel l'étape (c) de montage de la seconde cartouche (300) comporte une étape de montage de la seconde cartouche (300) de telle manière que le moment de lecture de la seconde cartouche au niveau de l'unité de mesure (116) puisse être ultérieur au moment de lecture de la première cartouche au niveau de l'unité de mesure.

3. Procédé selon la revendication 1, dans lequel la seconde fente (109a) est adjacente à la première fente (109a).

4. Procédé selon la revendication 1, dans lequel l'étape (c) de montage de la seconde cartouche (300) comporte une étape de montage de la seconde cartouche dans la seconde fente (109a) située à l'arrière de la première fente (109a) sans entraîner la bande transporteuse (109) dans une direction inverse (H) si la première cartouche a été déchargée de la bande transporteuse.

5. Procédé selon la revendication 1, comportant en outre l'étape suivante :
le transport de la première cartouche (300) vers la position de distribution d'échantillon au niveau d'un module de distribution (702) en entraînant la courroie de convoyeur (109) dans la direction avant (G).

6. Dispositif de diagnostic (100) de traitement de cartouches (300) de type à flux latéral comprenant :
une bande transporteuse (109) ayant une pluralité de fentes (109a) pour cartouche pour le montage des cartouches ;
une unité de mesure (116) pour lire le résultat de la réaction dans la cartouche ;
une unité d'incubation ;
une unité d'éjection de cartouche (214) pour éjecter la cartouche (300) montée sur un magasin (400) vers la bande transporteuse (109) ;
une unité de commande pour commander l'entraînement de la bande transporteuse (109) et l'unité d'éjection de cartouche (214), réalisant une réaction d'incubation sur la première cartouche par l'unité d'incubation ;
dans lequel l'unité de commande contrôle : le montage d'une première cartouche (300) dans une première fente (109a) de la bande transporteuse (109) en entraînant l'unité d'éjection de cartouche (214) ; le transport de la première cartouche vers l'unité de mesure (116) en entraînant la bande transporteuse (109) dans une direction avant (G) lorsqu'une durée d'incubation prédéterminée s'est écoulée à partir du moment du montage de la première cartouche ;
le montage d'une seconde cartouche (300) dans une seconde fente (109a), et le déchargement de la première cartouche (300) qui a été lue, à partir de la bande transporteuse (109), **caractérisé en ce que** l'unité de commande contrôle le montage de la seconde cartouche (300) dans la seconde fente (109a) qui est située à l'arrière de la première fente (109a) en entraînant la bande transporteuse (109) dans une direction inverse (H) et en entraînant l'unité d'éjection de cartouche (214) si la première cartouche en cours d'incubation est présente sur la bande transporteuse.
